# EUROPEAN PATENT SPECIFICATION

(11) **EP 2 350 233 B1**
(45) Date of publication and mention of the grant of the patent: **02.09.2020**
(21) Application number: 09760921.8
(22) Date of filing: 30.10.2009
(51) Int. Cl.: C10G 2/00, C10J 3/00, C10K 1/04, F02C 6/00, C10J 3/48, C10K 1/00, C10K 1/02, C10K 1/08, C10K 1/16, C10K 3/02, C10K 3/04, C10L 1/06, C10L 1/08

(54) **METHOD AND APPARATUS FOR PRODUCING LIQUID BIOFUEL FROM SOLID BIOMASS**
VERFAHREN UND VORRICHTUNG ZUR HERSTELLUNG VON FLÜSSIGEM BIOBRENNSTOFF AUS FESTER BIOMASSE
PROCÉDÉ ET APPAREIL POUR LA FABRICATION DE BIOCARBURANT LIQUIDE À PARTIR DE BIOMASSE SOLIDE

(30) Priority: 31.10.2008 FI 20086032
(43) Date of publication of application: 03.08.2011
(73) Proprietor: UPM-Kymmene Oyj, 00100 Helsinki (FI)
(72) Inventor: KUKKONEN, Petri, 00330 Helsinki (FI); KNUUTTILA, Pekka, 06400 Porvoo (FI); JOKELA, Pekka, 02660 Espoo (FI)
(74) Representative: Boco IP Oy Ab
(86) International application number: PCT/FI2009/050874
(87) International publication number: WO 2010/049592

(56) References cited:
- WO-A1-03/066517
- WO-A1-2005/005576
- WO-A1-2006/043112
- WO-A1-2008/130260
- US-A1- 2003 083 391

## Description

### FIELD OF THE INVENTION

The present invention relates to producing liquid biofuel from solid biomass according to the preamble of claims 1, 11. More particularly the present invention relates to a method and apparatus for producing liquid hydro carbonaceous product from solid biomass by gasifying solid biomass in a gasifier to produce raw synthesis gas, conditioning of the raw synthesis gas to purify the raw synthesis gas to obtain purified synthesis gas, the conditioning comprising lowering the temperature of the raw synthesis gas in a cooler producing saturated steam, subjecting the purified gas to a Fischer-Tropsch synthesis in a Fischer-Tropsch reactor to produce liquid hydro carbonaceous product and operating the superheating boiler substantially exclusively with one or more by-products generated in the method for producing liquid hydro carbonaceous product from solid biomass.

### BACKGROUND OF THE INVENTION

It is known to produce liquid fuels starting from solid feedstock that contains organic material. During the production the solid feedstock is gasified to convert it into raw synthesis gas. The formed raw synthesis gas is then purified into a purified synthesis gas. The purified synthesis gas in further converted into a liquid hydro carbonaceous product using Fischer-Tropsch -type synthesis. The thus formed liquid hydro carbonaceous product may be then upgraded to produce liquid biofuel. This kind of biomass to liquid processes are generally known for example from publications US 2005/0250862 A1 and WO 2006/043112.

The temperature of the raw synthesis gas coming from the gasification is generally at least about 700ºC or more. During the purification of the raw synthesis gas the temperature of the synthesis gas has to be lowered to a temperature needed for removing solid particles from the raw synthesis gas. The lowering of the temperature of the raw synthesis gas is essential for purification steps, such as filtering step, water-gas-shift (WGS) step and scrubbing step, arranged downstream of the cooling step. The raw synthesis gas is cooled before conducting it into the filtering step, because if raw synthesis gas would be fed uncooled from the gasifier into a filter, the temperature of the raw synthesis gas could cause the particles removed from the raw synthesis gas to sintrate or clog to the filter. Furthermore, the WGS reactor and scrubber are designed to operate at temperatures that are essential lower than about 700ºC.

Accordingly, the temperature of the raw synthesis gas is lowered in a cooler during the purification of the raw synthesis gas. During cooling the temperature of the raw synthesis gas is lowered to between about 175 to 275 ºC, depending on the application. Cooler may comprise an evaporator or alternatively a feed water preheater and an evaporator. Thus, during the cooling steam may be generated in the cooler.

The problem relating to the cooling is that the raw synthesis gas to be cooled consists mainly of hydrogen and carbon monoxide at reducing atmosphere. Because of the corrosive gas mixture of the raw synthesis gas the heat surfaces of the cooler may face metal dusting, as a consequence of which the cooler may produce only saturated steam, having temperature about 300 to 330ºC. This kind of saturated steam cannot be utilized efficiently.

### BRIEF DESCRIPTION OF THE INVENTION

An object of the present invention is to provide a method and an apparatus so as to solve the above problems. The objects of the invention are achieved by a method according characterizing portion of claim 1. The method being characterized operating the superheating boiler substantially exclusively with one or more by-products generated in the method for producing liquid hydro carbonaceous product from solid biomass. The objects of the invention are further achieved by an apparatus according characterizing portion of claim 11. The apparatus being characterized in that the superheating boiler is arranged to be operated substantially exclusively with one or more by-products generated in the apparatus in the production of liquid hydro carbonaceous product from solid biomass.

According to the present invention the saturated steam generated in the cooling is further superheated in a superheating boiler for producing superheated steam, having temperature about 500 to 550ºC. Thus, the saturated steam generated in the cooler is converted in a form that may be utilized in a steam turbine or in the process of producing liquid biofuel from solid biomass itself.

In the present invention one or more by-products generated in producing liquid hydro carbonaceous product from solid biomass is utilized as fuel in the superheating boiler. In one embodiment tail gas generated in the Fischer-Tropsch synthesis is utilized as a fuel in the superheating boiler. In another embodiment of the present invention the raw synthesis gas is filtered in a filter to remove particles, such as ash and char, from the raw synthesis gas and at least part of the particles filtered in the filter is utilized as a fuel in the superheating boiler. In yet embodiment of the present invention the raw synthesis gas is purified by ultra purification for removing sulfur components, CO₂, H₂O, HCN, CH₃Cl, carbonyls, Cl and NO_{X} sulfur from the raw synthesis gas and at least part of the by-product gas generated is utilized or destroyed in the superheating boiler. In one embodiment of the present invention the liquid hydro carbonaceous product obtained from Fischer-Tropsch synthesis is upgraded into biofuel and at least part of the by-product fractions generated in the upgrading is utilized as a fuel in the superheating boiler.

The advantage of the present invention is that superheating the saturated steam generated in the cooling step changes the saturated steam into a form that may be utilized further in the process of producing liquid biofuel from solid biomass or in a steam turbine. Thus, superheated steam produced in the superheating may enhance the total efficiency of the process for producing liquid biofuel. A further advantage of the present invention is that by-products originating from the process of producing liquid biofuel from solid biomass may be utilised in the superheating as fuel for the superheating boiler. The superheating boiler may thus be operated substantially exclusively with the by-products originating from the process of producing liquid biofuel from the solid biomass. Thus, the synthesis gas or any other product gas or liquid generated in the process of producing liquid biofuel from the solid biomass is not used for superheating and the overall yield of the process is not reduced.

### BRIEF DESCRIPTION OF THE DRAWINGS

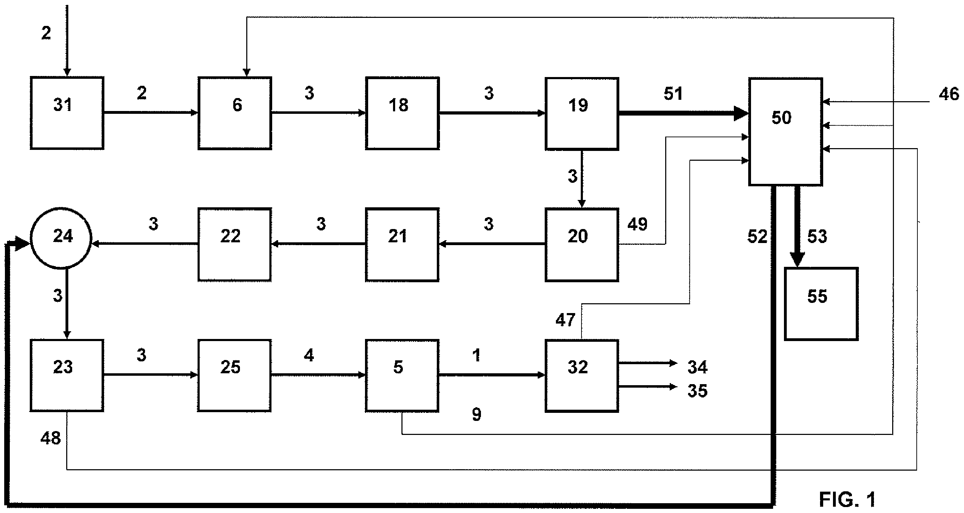

In the following the invention will be described in greater detail by means of preferred embodiments with reference to the attached drawings, in which
Figure 1 shows a schematic flow chart of one embodiment of the present invention.

### DETAILED DESCRIPTION OF THE INVENTION

Figure 1 is shows flow chart of one embodiment of a method and apparatus for producing liquid biofuel from solid biomass. However, it should be noted that the method and apparatus of the present invention comprises gasification of solid biomass 2 in a gasifier 6 into raw synthesis gas 3, conditioning the raw synthesis gas by conditioning means 18, 19, 20, 21, 22, 24, 23, 25 into purified synthesis gas 4 and subjecting the purified gas 4 to a Fischer-Tropsch synthesis in a Fischer-Tropsch reactor 5 to produce liquid hydro carbonaceous product 1, but the composition of conditioning steps and conditioning means may vary from one embodiment to another.

As shown in figure 1, the solid biomass 2 is fed to a gasifier 6 through solid biomass pretreatment and supply means 31. In this application the term solid biomass comprises substantially any kind of solid biomass that is suitable to be gasified. The solid biomass is typically selected from virgin and waste materials of plant, animal and/or fish industry, such as municipal waste, industrial waste or by-products, agricultural waste or by-products, waste or by-products of wood-processing industry, waste or by-products of food industry, marine plants and combinations thereof. The solid biomass may also comprise vegetable oils, animal fats, fish oils. Natural waxes and fatty acids, or the like that may also be alternatively in liquid form. The biomass pretreatment and supply means 31 may comprise crusher and/or dryer for crushing the solid biomass 2 and drying it to a moisture content less than 20%, preferably by thermal drying. The biomass 2 pretreatment and supply means 31 may further comprise a lock hopper for pressurising the solid biomass 2 at least to the pressure prevailing in the gasifier 6.

From the solid biomass pretreatment and supply means 31 the biomass 2 is fed to the gasifier 6. In the gasifier 6 the solid biomass 2 is gasified to produce raw synthesis gas 3 comprising carbon monoxide and hydrogen. In this context the raw synthesis gas means synthesis gas that in addition to carbon monoxide and hydrogen can contain impurities such as carbon dioxide (CO₂), methane (CH₄), water (H₂O), nitrogen (N₂), hydrogen sulfide (H₂S), ammonia (NH₃), hydrogen chloride (HCl), tar and small particles such as ash and soot. The gasifying step comprises at least partial combustion of the solid biomass 2 in a gasifier 6 to produce the raw synthesis gas 3. The gasifier 6 may be fluidized bed gasifier, for example a circulating fluidized bed reactor or a bubbling fluidized bed reactor. Oxygen and steam having temperature of about 200ºC and in addition possible also recycled tail gas 9 from the Fischer-Tropsch reactor 5 are used as fluidizing agents in the gasifier 6. The compounds of solid biomass 2 will react with the steam endothermically generating carbon monoxide and hydrogen and the compounds of the solid biomass 2 will react with the oxygen exothermically generating carbon monoxide, carbon dioxide and additional steam. The result of this is the raw synthesis gas 3. The gasifier may operate for example at 10 bar and 850ºC.

From the gasifier 6 the raw synthesis gas 3 is fed to the conditioning or purification means to purify the raw synthesis gas obtained in the gasification. In a preferred embodiment the conditioning of the raw synthesis gas 3 comprises a sequence of conditioning steps and apparatuses in which various kind of conditioning of the raw synthesis gas is performed for purifying the raw synthesis gas 3 into a form suitable for a Fischer-Tropsch type synthesis. This means that for example the raw synthesis gas 3 is purified and the purified synthesis gas has a molar ratio of hydrogen to carbon monoxide between 2,5 to 1 and 0,5 to 1, preferably between 2,1 to 1 and 1,8 to 1, and more preferably about 2 to 1.

From the gasifier 6 the raw synthesis gas 3 is fed to a reformer 18 for catalytic treatment for converting tar and methane present in the raw synthesis gas 3 into carbon monoxide and hydrogen. Catalyst used in the reformer 18 may comprise for example nickel. Since tar and methane reforming are endothermic chemical reactions, and raw synthesis gas leaving the gasifier 6 is at too low temperature, the raw synthesis gas will be heated up before feeding it to the reformer 18, preferably by feeding oxygen into the raw synthesis gas. To prevent hotspots and ash melting, oxygen will be fired together with steam and recirculated FT tail gas. Thus, the temperature of the raw synthesis gas is for example 900ºC before the raw synthesis gas flows into the reformer.

Between the gasifier 6 and the reformer 18 there may also be one or more particle separation steps for removing particles such as ash, char and bed material from the raw synthesis gas 3. The particle separation steps are performed preferably with one or more cyclones (not shown).

After the reformer 18 the raw synthesis gas 3 is fed to a subsequent conditioning step in which it is fed to a cooler 19 for lowering the temperature of the raw synthesis gas 3. During cooling the temperature of the raw synthesis gas 3 is lowered to between about 175 to 275 ºC, preferably to about 250ºC, depending on the application. Cooler 19 may comprise an evaporator or alternatively a feed water preheater and an evaporator. Thus, during the cooling steam is generated in the cooler 19. The raw synthesis gas 3 to be cooled consists mainly of hydrogen and carbon monoxide at reducing atmosphere. Because of the corrosive gas mixture of the raw synthesis gas 3 the heat surfaces of the cooler 19 may face metal dusting, as a consequence of which the temperature of the cooler 19 must be maintained in a range below the metal dusting temperature. Because of this, the cooler 19 may produce only saturated steam, having temperature for example about 300 to 330ºC, at high pressure, such as 115 bar.

The cooling of the raw synthesis gas is essential for the next conditioning step, the filtering step following the cooling step. The raw synthesis gas 3 has to be cooled before conducting it into the filtering step, because if raw synthesis gas is fed uncooled from the gasifier 6 into a filter 20, the temperature of the raw synthesis gas 3 could cause the particles removed from the raw synthesis gas 3 to sintrate or clog to the filter 20 used in the filtering step. The filter 20 comprises preferably a metallic or sinter candle filter. The filter cake will be removed from the filter elements by repeating nitrogen or CO pressure shock. In the filter 20 solid particles, such as ash, soot, char and entrained bed materials are removed from the raw synthesis gas 3.

The conditioning of the raw synthesis gas 3 comprises preferably also a step for adjusting the molar ratio of hydrogen and carbon monoxide by a water- gas-shift reaction in a water-gas-shift (WGS) reactor 21 to between 2,5 to 1 and 0,5 to 1, preferably between 2,1 to 1 and 1,8 to 1, and more preferably about 2 to 1. The WGS reactor 21 is located downstream of the filter 20 and thus the filtered raw synthesis gas 3 is fed to the WGS reactor 21, as shown in figure 1.

The raw synthesis gas 3 is preferably further conditioned in a scrubber 22 to remove remaining solids, residual tar components and also HCl, NH₃ and other components from the raw synthesis gas 3 by scrubbing. The scrubber 22 is may located downstream of the WGS reactor 2, preferably such that raw synthesis gas 3 is fed from the WGS reactor 21 to the scrubber 22.

The conditioning of the raw synthesis gas 3 comprises ultra purification means 23 for cleaning of the raw synthesis gas. The ultra purification means removes sulfur components, such as H₂S, CO₂ (carbon dioxide), H₂0 (water), HCN (hydrogen cyanide), CH₃Cl (methyl chloride), carbonyls, Cl (chloride) and NO_{X} (nitrogen oxide) from the raw synthesis gas 3. Preferably the raw synthesis gas 3 is fed from the scrubber 22 to the ultra purification means 23. The ultra purification may be performed with physical cleaning process in which methanol or dimethyl ether is used a solvent at 30 to 40 bar pressure and cryogenic temperatures -25º to -60ºC. Alternatively, the ultra purification may be performed with chemical cleaning process in which the raw synthesis gas is chemically washed, for example with amine.

Before ultra purification means 23 the pressure of the raw synthesis gas 3 is raised in a compressor 24 to about 30 to 40 bar, such that the raw synthesis gas 3 entering the ultra purification means is already at a suitable pressure.

The conditioning may also comprise conditioning step comprising a guard bed reactor 25 in which possible residual sulfur components are removed from the raw synthesis gas 3. The guard bed reactor 25 comprises ZnO catalyst and active carbon. Preferably the guard bed reactor 25 is located downstream of the ultra purification means 23.

The conditioning of the raw synthesis gas 3 may comprise all the above mentioned steps and apparatuses or it may comprise only some of the steps and apparatuses described above. Furthermore, the conditioning means and steps may also comprise some additional conditioning steps and apparatuses that are not described. The sequence of the conditioning steps and apparatuses is preferably the above described, but it may also in some cases be different.

From the conditioning means, and in this case from the guard bed reactor 25, the purified synthesis gas 4, obtained from the raw synthesis gas 3 by the conditioning means, is fed to the Fischer-Tropsch reactor 5 for conducting the Fischer-Tropsch synthesis for the purified synthesis gas 4. In the Fischer-Tropsch synthesis carbon and hydrogen monoxide are converted into liquid hydrocarbons of various forms by catalyzed chemical reaction. The principal purpose of this process is to produce a synthetic petroleum substitute product, a liquid hydro carbonaceous product 1. The desired fuel component is diesel fraction and as a by-product also Naphta is produced. Fischer-Tropsch reactor 5 operates typically at a temperature of 200 to 220 °C. Process includes an internal cooling and the produced heat can be utilized as low pressure steam. The Fischer-Tropsch synthesis produces also so called tail gas 9 as a by-product.

The liquid hydro carbonaceous product 1 may further be fed from the Fischer-Tropsch reactor 5 product upgrade section 32 where the he liquid hydro carbonaceous products 1 will be first flashed to separate the light hydro carbons from the product stream. The flashed product stream will be hydro cracked to maximize the diesel fraction. Hydro isomerisation will decrease the cloud point of the diesel fraction enabling usage of the diesel product in cold climates. In the distillation process, the heavy fractions are separated and circulated back to hydro cracking and hydro isomerisation section. Distillation also separates the final end products, diesel fractions 34 and naphtha fractions 35 from each other. The product upgrade may also separate some by-product fractions 47 from diesel and naphtha fractions 34, 35.

As described above, the temperature of the raw synthesis gas 3 or the purified synthesis gas 4 has to be lowered in a cooler during the conditioning of the synthesis gas because of the operating limits of the conditioning means and Fischer-Tropsch reactor 5. The cooler 19 is preferably located to the conditioning means and more preferably downstream of reformer 18 and prior to filter 20. As mentioned earlier, the cooler 20 comprises an evaporator or alternatively a feed water preheater and an evaporator. Thus, during the cooling steam may be generated in the cooler 20. During cooling the temperature of the raw synthesis gas is lowered to between about 175 to 275 ºC, depending on the application. Typically, the temperature of the raw synthesis gas 3 is lowered to about 250 ºC. Cooler 19 produces high pressure saturated steam 51 having preferably temperature about 300 to 330ºC and pressure about 100 to 130 bars. Typically, the saturated steam 51 is at temperature about 320ºC and at pressure 115 bar.

According to the present invention the high pressure saturated steam 51 is fed from the cooler 19 to a superheating boiler 50 for producing superheated steam 52, 53. The superheating boiler 50 may be any known type superheating boiler that is suitable for superheating steam. Superheating boiler is a combustion apparatus which is equipped with a superheater for superheating the saturated steam circulating in the superheater tubing. As fuel for the combustion apparatus can be used different types of fuels. The superheated steam 52, 53 leaving the superheating boiler 50 is typically at temperature between 500 to 550ºC, preferably 510ºC, and at pressure about 100 to 130 bars, preferably at pressure 115 bar. This way the saturated steam from the cooler 19 may be converted into a form that may be utilized further in the method for producing liquid hydro carbonaceous product 1 or for producing energy.

The superheated steam 53 may further be fed to a steam turbine 55 for producing electrical energy. In this application, superheating boiler 50 is operatively connected to a steam turbine 55 for utilizing the superheated steam 53 in the steam turbine 55. If the apparatus for producing the liquid carbonaceous product 1 is located in connection with an industrial plant or at site of a mill, such as forest industry plant, the superheated steam 53 may be used in a steam turbine already existing. The forest industry plant may be a sawmill, cellulose mill, papermill comprising steam producing boiler(s), such as recovery boiler, power boiler, waste heat boiler that produce steam for a turbine. In that case thermal power corresponding amount of thermal power of the superheated steam 53 utilized in the steam turbine 55 may be saved in the existing boilers(s) of the forest industry plant. Thus, the consumption of fuel may decrease.

Alternatively, or additionally superheated steam 52 obtained from the superheating boiler 50 may be utilized for pressurising the raw synthesis gas 3 or the purified synthesis gas 4 before supplying it into the Fischer-Tropsch reactor 5. Thus, the superheated steam 52 may also be fed from the superheating boiler 50 to the compressor 24, as is shown in figure 1. Thus, the superheating boiler 50 is operatively connected to compressor 24 for utilizing the superheated steam 52 to pressurise the raw synthesis gas 3 before supplying it into the Fischer-Tropsch reactor 5.

In the present invention one or more by-products generated in the method or process for producing liquid hydro carbonaceous product 1 from solid biomass 2 is used as fuel in the superheating boiler 50. According to the present invention one or more by-products are used substantially exclusively for operating the superheating boiler 50.

As described above, tail gas is generated in the Fischer-Tropsch synthesis in the Fischer-Tropsch reactor 5. This tail gas 9 is very pure and contains combustible components. The main combustible components of the tail gas 9 are carbon monoxide, hydrogen, and hydrocarbons C1-C5. Furthermore, mass and energy calculations of the method for producing liquid hydro carbonaceous product 1 from solid biomass 2 indicate that the thermal power for superheating the saturated steam 51 generated in cooler 19 and the thermal power of the tail gas 9 correspond substantially to each other. Thus, the tail gas 9 can be used as fuel for the superheating boiler 50 and it may be fed to the superheating boiler 50 with tail gas supply means. Some of the tail gas 9 may also be recirculated to the gasifier 6. The tail gas supply means comprise pipes and possible valves or the like for conducting the tail gas 9 from the Fischer-Tropsch reactor 5 to the superheating boiler 50.

Also at least part of the material filtered in the filter 20 may be utilized in the superheating boiler 50 as a fuel. The particles filtered from the raw synthesis gas 3 in the filter 20 comprise typically ash, soot and char. The ash comprises a lot of carbon, typically about 35 to 45 %. Therefore ash 49 may be fed by particle supply means from the filter 20 to the superheating boiler 50 to be used as fuel for superheating the saturated steam 51. The particle supply means comprise pipes, conveyors or the like for conducting the ash 49 from the filter 20 to the superheating boiler 50.

The ultra purification means 23 generates a H₂S rich by-product gas 48 that contains also other sulfur components, CO₂ (carbon dioxide), H₂O (water), HCN (hydrogen cyanide), CH₃Cl (methyl chloride), carbonyls, CI (chloride) and NOx (nitrogen oxide) as a result of the purification of the raw synthesis gas. This by-product gas 48 may in some embodiments be fed by ultra purification by-product supply means to the superheating boiler 50 to by used as fuel in it. In the same time, or alternatively, the superheating boiler 50 is also capable to destroy the H₂S rich gas 48 originated from the ultra purification 23. This H₂S rich gas 48 may not in all cases provide any additional fuel capacity in the superheating boiler 50 but this provides an alternative process step to destroy the odorous gas stream 48. If this H₂S containing, odorous gas 48 is burned in superheating boiler 50 the produced flue gases must be cleaned, for example by scrubbing to remove sulphur oxide components. Also, the burner in the superheating boiler needs to be designed as low NOx burner to get the NOx content of the flue gases below the NOx emission levels. The by-product supply means may comprise pipes, valves or the like for conducting the by-product gases 48 from the ultra purification 23 to the superheating boiler 50.

In the product upgrade section 32 by-product fractions 47 may be generated in addition to diesel fractions 34 and naphtha fractions 35. These fractions contain gaseous or liquid light weight hydrocarbons. Also at least part of the product upgrade by-product fractions 47 may be fed with product upgrade by-product supply means to the superheating boiler 50 to be used as a fuel for superheating the saturated steam 51. The product upgrade by-product supply means may comprise pipes, valves or the like for conducting the by-product fractions 47 from the ultra purification 23 to the superheating boiler 50.

The superheating boiler 50 is preferably also arranged to use light fuel oil and/or natural gas as a support fuel 46 in the superheating boiler 50 for example for adjusting or controlling the operation of the superheating boiler. The support fuel 46 may also be utilized for start up. The tail gas 9 produced in the process provides substantially the same amount of fuel power as needed for operating the superheating boiler 50 in normal operating conditions. When necessary 15 % or less of the total fuel power of the superheating boiler 50 may be supplied as separate support fuel 46 for adjusting or controlling the operation of the superheating boiler 50. In a preferred embodiment 10 % or less, and more preferably 5 % or less of the total fuel power of the superheating boiler 50 may be supplied to the superheating boiler 50 as separate support fuel 46. According to the present invention, no synthesis gas or other product gas or liquid is used to operate the superheating boiler 50. Therefore, using the superheating boiler 50 does not decrease the yield of the liquid biofuel from the process.

Accordingly, the present invention provides that one or more by-products 9, 47, 48, 49, generated in a process for producing liquid biofuel from solid biomass 2 may be used, as fuel in a superheating boiler 50 for superheating the saturated steam 51 originated from the cooling step. The saturated steam originating from cooling the raw synthesis gas 3 in a process for producing liquid biofuel from solid biomass 2 may also be used for pressurising the purified synthesis gas 4 in a compressor before supplying it into the Fischer-Tropsch reactor 5. Therefore, the energy efficiency of the method and apparatus for producing liquid hydro carbonaceous product 1 from biomass or the energy efficiency of an industrial plant having integrated apparatus for producing liquid hydro carbonaceous product 1 from biomass may be enhanced.

In one embodiment of the present invention feed water having temperature of 103 °C is supplied from the main boiler to the cooler 19. In the cooler 19 the feed water is vaporized as it receives thermal energy from the purified synthesis gas 4. The vaporized feed water attains temperature of 323 °C forms saturated steam 51. The saturated steam 51 is supplied to the superheating boiler 50 in which it is superheated to form superheated steam having temperature of 510 °C. In the superheating boiler, tail gas is used as fuel. Support fuel 46 may be used in the superheating boiler 50 for adjusting the operation of the superheating boiler 50 to eliminate variations in the tail gas production.

It will be obvious to a person skilled in the art that, as the technology advances, the inventive concept can be implemented in various ways. The invention and its embodiments are not limited to the examples described above but may vary within the scope of the claims.

### LIST OF REFERENCE NUMERALS

- 1: Liquid hydro carbonaceous product
- 2: Solid biomass
- 3: Raw synthesis gas
- 4: Purified synthesis gas
- 5: Gasifier
- 9: Tail gas
- 18: Reformer
- 19: Cooler
- 20: Filter
- 21: Water Gas Shift (WGS) reactor
- 22: Scrubber
- 23: Ultra purification means
- 24: Compressor
- 25: Guard bed reactor
- 31: Solid biomass pre-treatment and supply means
- 32: Product upgrade means
- 34: Diesel fraction
- 35: Naphta fraction
- 46: Support fuel
- 47: Product upgrade by-product fractions
- 48: Ultra purification by-product gas
- 49: Filtered ash
- 50: Superheating boiler
- 51: Saturated steam
- 52: Superheated steam to steam to compressor
- 53: Superheated steam to steam turbine
- 55: Steam turbine

## Claims

1. A method for producing liquid hydro carbonaceous product (1) from solid biomass (2), the method comprising:
gasifying solid biomass (2) in a gasifier (6) to produce raw synthesis gas (3);
conditioning of the raw synthesis gas (3) to purify the raw synthesis gas (3) to obtain purified synthesis gas (4), the conditioning comprising lowering the temperature of the raw synthesis gas (3) in a cooler (19) producing saturated steam (51), filtering the raw synthesis gas (3) in a filter (20) and conditioning the raw synthesis gas (3) by ultra purification (23);
subjecting the purified gas (4) to a Fischer-Tropsch synthesis in a Fischer-Tropsch reactor (5) to produce liquid hydro carbonaceous product (1)
optionally upgrading the liquid hydro carbonaceous product (1) in product upgrading (32) by first flashing the liquid hydro carbonaceous product (1) to separate the light hydro carbons from the product stream; and
superheating the saturated steam (51) produced by the cooler (19) in a superheating boiler (50) for producing superheated steam (52, 53),
**characterized by** operating the superheating boiler (50) exclusively with tail gas (9) generated in the Fischer-Tropsch synthesis and one or more by-products (49, 48, 47) generated in the filter (20), the ultra purification (23) or the product upgrading (32) of the method, optionally together with separate support fuel (46) utilized for start-up or for adjusting or controlling the operation of the superheating boiler (50), wherein the amount of support fuel for adjusting or controlling is 15 % or less of the total fuel power of the superheating boiler (50).

2. A method according to claim 1, **characterized by** conditioning of the raw synthesis gas (3) by filtering the raw synthesis gas (3) in a filter (20) to remove particles, such as ash (49), from the raw synthesis gas (3), and supplying ash, comprising char, collected in the filter (20), to the superheating boiler (50) to be used as a fuel in the superheating boiler (50).

3. A method according to any one of claims 1 or 2, **characterized by** conditioning the raw synthesis gas (3) by ultra purification (23) for removing sulfur components, CO₂ (carbon dioxide), H₂O (water), HCN (hydrogen cyanide), CH₃Cl (methyl chloride), carbonyls, CI (chloride) and NO_{X} (nitrogen oxide) from the raw synthesis gas (3); and supplying by-product gas (48) generated in the ultra purification (23) to the superheating boiler (50) to be used as a fuel in the superheating boiler (50).

4. A method according to claim 3, **characterized by** supplying H₂S rich by-product gas (48) generated in the ultra purification (23) to the superheating boiler (50) to be destroyed in the superheating boiler (50).

5. A method according to any one of claims 1 to 4, **characterized in that** the method further comprises product upgrading (32) for upgrading the liquid hydro carbonaceous product (1) obtained from Fischer-Tropsch synthesis to at least one diesel fraction (34) and at least one naptha fraction (35).

6. A method according to claim 5, **characterized by** supplying by-product fractions (47) of the liquid hydro carbonaceous product (1) generated in the product upgrading (32) to the superheating boiler (50) to be used as a fuel in the superheating boiler (50).

7. A method according to any one of claims 1 to 6, **characterized by** using separate support fuel (46) for adjusting the operation of the superheating boiler (50), the support fuel (46) being light fuel oil and/or natural gas.

8. A method according to claim 7, **characterized by** supplying 15 % or less, preferably 10 % or less, more preferably 5 % or less of the total fuel power as support fuel (46) in the superheating boiler (50).

9. A method according to any one of claims 1 to 8, **characterized by** utilizing the superheated steam (53) in a steam turbine (55).

10. A method according to any one of claims 1 to 9, **characterized by** utilizing the superheated steam (52) for pressurising (24) the raw synthesis gas (3) or the purified synthesis gas (4) before supplying it into the Fischer-Tropsch reactor (5).

11. An apparatus for producing liquid hydro carbonaceous product (1) from solid biomass (2), the apparatus comprising
a gasifier (6) for gasifying solid biomass (2) to produce raw synthesis gas (3);
conditioning means (18, 19, 20, 21, 22, 24, 23) for conditioning the raw synthesis gas (3) to obtain purified synthesis gas (4), the conditioning means comprising a cooler (19) for lowering the temperature of the raw synthesis gas (3), the cooler (19) being arranged to generate saturated steam (51), a filter (20) for filtering the raw synthesis gas (3) and ultra purification means (23);
a Fischer-Tropsch reactor (5) for subjecting the purified gas (4) to a Fischer-Tropsch synthesis to produce liquid hydro carbonaceous product (1);
optionally product upgrading means (32) for upgrading the liquid hydro carbonaceous product (1) obtained from Fischer-Tropsch synthesis by first flashing the liquid hydro carbonaceous product (1) to separate the light hydro carbons from the product stream and
a superheating boiler (50) for producing superheated steam (52, 53) from the saturated steam (51),
**characterized in that** the superheating boiler (50) is arranged to be operated exclusively with tail gas (9) generated in the Fischer-Tropsch synthesis and one or more by-products (49, 48, 47) generated in the filter (20), the ultra purification (23) or the product upgrading (32) in the production of liquid hydro carbonaceous product (1) from solid biomass (2) and fed by by-product supply means, optionally together with separate support fuel (46) utilized for start-up or for adjusting or controlling the operation of the superheating boiler (50)), wherein the amount of support fuel for adjusting or controlling is 15 % or less of the total fuel power of the superheating boiler (50).

12. An apparatus according to claim 11, **characterized in that** the apparatus comprises tail gas supply means for supplying tail gas (9) generated in the Fischer-Tropsch synthesis to the superheating boiler (50) to be used as a fuel in the superheating boiler (50).

13. An apparatus according to claim 11 or 12, **characterized in that** the conditioning means comprise a filter (20) for filtering the raw synthesis gas (3) in a filter (20) to remove particles, such as ash (49), from the raw synthesis gas (3), and that apparatus further comprises particle supply means for supplying at least part of the particles filtered in the filter (20) to the superheating boiler (50) to be used as a fuel in the superheating boiler (50).

14. An apparatus according to any one of claims 11 to 13, **characterized in that** the conditioning means comprise ultra purification means (23) for removing sulfur components, CO₂ (carbon dioxide), H₂O (water), HCN (hydrogen cyanide), CH₃Cl (methyl chloride), carbonyls, CI (chloride) and NOx (nitrogen oxide) from the raw synthesis gas (3), and that that apparatus further comprises ultra purification by-product supply means for supplying at least part of the by-product gas (48) generated in the ultra purification to the superheating boiler (50).

15. An apparatus according to claim 14, **characterized in that** the ultra purification by-product supply means are arranged to supply H₂S rich by-product gas (48) generated in the ultra purification to the superheating boiler (50) to be destroyed in the superheating boiler (50).

16. An apparatus according to any one of claims 11 to 15, **characterized in that** conditioning means comprises product upgrading means (32) for upgrading the liquid hydro carbonaceous product (1) obtained from Fischer-Tropsch synthesis, and that the apparatus further comprise product upgrade by-product supply means for supplying at least part of the by-product fractions (47) generated in the product upgrading to the superheating boiler (50) to be used as a fuel in the superheating boiler (50).

17. An apparatus according to any one of claims 11 to 16, **characterized in that** the superheating boiler (50) is arranged to use support fuel (46) for adjusting the operation of the superheating boiler (50), the support fuel (46) being light fuel oil and/or natural gas.

18. An apparatus according to claim 17, **characterized in that** 15 % or less, preferably 10 % or less, more preferably 5 % or less of the total fuel power is arranged to be supplied to the superheating boiler (50) as support fuel (46).

19. An apparatus according to any one of claims 11 to 18, **characterized in that** superheating boiler (50) is operatively connected to a steam turbine for utilizing the superheated steam (53) in the steam turbine.

20. An apparatus according to any one of claims 11 to 18, **characterized in that** superheating boiler (50) is operatively connected to compressor (24) for utilizing the superheated steam (52) to pressurise the raw synthesis gas (3) to the purified synthesis gas (4) before supplying it into the Fischer-Tropsch reactor (5).

21. An apparatus according to any one of claims 11 to 20, **characterized in that** apparatus is an integral part of an industrial plant having a steam turbine (55).

## Patentansprüche

1. Verfahren zur Herstellung eines flüssigen kohlenwasserstoffhaltigen Produkts (1) aus fester Biomasse (2), wobei das Verfahren umfasst:
Vergasen von fester Biomasse (2) in einem Vergaser (6), um Rohsynthesegas (3) herzustellen;
Konditionieren des Rohsynthesegases (3) zur Reinigung des Rohsynthesegases (3), um gereinigtes Synthesegas (4) zu gewinnen, wobei die Konditionierung umfasst: Absenken der Temperatur des Rohsynthesegases (3) in einem Kühler (19), der Sattdampf (51) erzeugt, Filtern des Rohsynthesegases (3) in einem Filter (20) und Konditionieren des Rohsynthesegases (3) durch Ultrareinigung (23);
Unterziehen des gereinigten Gases (4) einer Fischer-Tropsch-Synthese in einem Fischer-Tropsch-Reaktor (5) zur Herstellung eines flüssigen kohlenwasserstoffhaltigen Produkts (1),
wahlweise Veredeln des flüssigen kohlenwasserstoffhaltigen Produkts (1) in der Produktveredelung (32), indem das flüssige kohlenwasserstoffhaltige Produkt (1) zunächst flashverdampft wird, um die leichten Kohlenwasserstoffe vom Produktstrom abzuscheiden; und
Überhitzen des vom Kühler (19) erzeugten Sattdampfes (51) in einem Überhitzungskessel (50) zur Erzeugung von überhitztem Dampf (52, 53),
**gekennzeichnet durch** Betreiben des Überhitzungskessels (50) ausschließlich mit in der Fischer-Tropsch-Synthese erzeugtem Abgas (9) und einem oder mehreren im Filter (20), in der Ultrareinigung (23) oder der Produktveredelung (32) des Verfahrens erzeugten Nebenprodukten (49, 48, 47), wahlweise zusammen mit einem für den Startbetrieb oder für die Einstellung oder Regelung des Betriebs des Überhitzungskessels (50) genutzten separaten Stützbrennstoff (46), wobei die Stützbrennstoffmenge für die Einstellung oder Regelung 15 % oder weniger der Gesamtbrennstoffleistung des Überhitzungskessels (50) beträgt.

2. Verfahren nach Anspruch 1, **gekennzeichnet durch** Konditionieren des Rohsynthesegases (3) durch Filterung des Rohsynthesegases (3) in einem Filter (20), um Partikel wie Asche (49) aus dem Rohsynthesegas (3) zu beseitigen, und Zuführen von im Filter (20) gesammelter Asche, die Holzkohle umfasst, zum Überhitzungskessel (50) zwecks Verwendung als Brennstoff im Überhitzungskessel (50).

3. Verfahren nach einem der Ansprüche 1 oder 2, **gekennzeichnet durch** Konditionieren des Rohsynthesegases (3) durch Ultrareinigung (23) zur Beseitigung von Schwefelbestandteilen, CO₂ (Kohlenstoffdioxid), H₂O (Wasser), HCN (Cyanwasserstoff), CH₃Cl (Methylchlorid), Carbonylen, Cl (Chlorid) und NOx (Stickstoffoxid) aus dem Rohsynthesegas (3); und Zuführen eines in der Ultrareinigung (23) erzeugten gasförmigen Nebenprodukts (48) zum Überhitzungskessel (50) zwecks Verwendung als Brennstoff im Überhitzungskessel (50).

4. Verfahren nach Anspruch 3, **gekennzeichnet durch** Zuführen eines in der Ultrareinigung (23) erzeugten H2S-reichen gasförmigen Nebenprodukts (48) zum Überhitzungskessel (50) zwecks Vernichtung im Überhitzungskessel (50).

5. Verfahren nach einem der Ansprüche 1 bis 4, **dadurch gekennzeichnet, dass** das Verfahren ferner eine Produktveredelung (32) umfasst, um das aus der Fischer-Tropsch-Synthese gewonnene flüssige kohlenwasserstoffhaltige Produkt (1) zu mindestens einer Dieselfraktion (34) und mindestens einer Naphthafraktion (35) zu veredeln.

6. Verfahren nach Anspruch 5, **gekennzeichnet durch** Zuführen von in der Produktveredelung (32) erzeugten Nebenproduktfraktionen (47) des flüssigen kohlenwasserstoffhaltigen Produkts (1) zum Überhitzungskessel (50) zwecks Verwendung als Brennstoff im Überhitzungskessel (50).

7. Verfahren nach einem der Ansprüche 1 bis 6, **gekennzeichnet durch** Verwendung von separatem Stützbrennstoff (46) zur Einstellung des Betriebs des Überhitzungskessels (50), wobei der Stützbrennstoff (46) leichtes Heizöl und/oder Erdgas ist.

8. Verfahren nach Anspruch 7, **gekennzeichnet durch** Zuführen von 15 % oder weniger, bevorzugt 10 % oder weniger, bevorzugter 5 % oder weniger, der Gesamtbrennstoffleistung als Stützbrennstoff (46) in den Überhitzungskessel (50).

9. Verfahren nach einem der Ansprüche 1 bis 8, **gekennzeichnet durch** Nutzung des überhitzten Dampfs (53) in einer Dampfturbine (55).

10. Verfahren nach einem der Ansprüche 1 bis 9, **gekennzeichnet durch** Nutzung des überhitzten Dampfs (52) zur Druckbeaufschlagung (24) des Rohsynthesegases (3) oder des gereinigten Synthesegases (4) vor dessen Zuführung in den Fischer-Tropsch-Reaktor (5).

11. Vorrichtung zur Herstellung eines flüssigen kohlenwasserstoffhaltigen Produkts (1) aus fester Biomasse (2), wobei die Vorrichtung umfasst:
einen Vergaser (6) zum Vergasen von fester Biomasse (2), um Rohsynthesegas (3) herzustellen;
Konditionierungsmittel (18, 19, 20, 21, 22, 24, 23) zum Konditionieren des Rohsynthesegases (3), um gereinigtes Synthesegas (4) zu gewinnen, wobei die Konditionierungsmittel einen Kühler (19) zum Absenken der Temperatur des Rohsynthesegases (3), wobei der Kühler (19) zur Erzeugung von Sattdampf (51) eingerichtet ist, einen Filter (20) zur Filterung des Rohsynthesegases (3) und Ultrareinigungsmittel (23) umfassen;
einen Fischer-Tropsch-Reaktor (5), um das gereinigte Gas (4) einer Fischer-Tropsch-Synthese zu unterziehen, um das flüssige kohlenwasserstoffhaltige Produkt (1) herzustellen;
wahlweise Produktveredelungsmittel (32) zur Veredelung des aus der Fischer-Tropsch-Synthese gewonnenen flüssigen kohlenwasserstoffhaltigen Produkts (1) durch zunächst Flashverdampfung des flüssigen kohlenwasserstoffhaltigen Produkts (1), um die leichten Kohlenwasserstoffe aus dem Produktstrom abzuscheiden, und
einen Überhitzungskessel (50) zur Erzeugung von überhitztem Dampf (52, 53) aus dem Sattdampf (51),
**dadurch gekennzeichnet, dass** der Überhitzungskessel (50) dazu eingerichtet ist, ausschließlich mit in der Fischer-Tropsch-Synthese erzeugtem Abgas (9) und einem oder mehreren im Filter (20), in der Ultrareinigung (23) oder der Produktveredelung (32) bei der Produktion des flüssigen kohlenwasserstoffhaltigen Produkts (1) aus fester Biomasse (2) erzeugten und über Nebenprodukt-Zuführmittel eingespeisten Nebenprodukten (49, 48, 47), wahlweise zusammen mit einem für den Startbetrieb oder für die Einstellung oder Regelung des Betriebs des Überhitzungskessels (50) genutzten separaten Stützbrennstoff (46), betrieben zu werden, wobei die Stützbrennstoffmenge für die Einstellung oder Regelung 15 % oder weniger der Gesamtbrennstoffleistung des Überhitzungskessels (50) beträgt.

12. Vorrichtung nach Anspruch 11, **dadurch gekennzeichnet, dass** die Vorrichtung Abgaszuführmittel zum Zuführen eines in der Fischer-Tropsch-Synthese erzeugten Abgases (9) zum Überhitzungskessel (50) zwecks Verwendung als Brennstoff im Überhitzungskessel (50) umfasst.

13. Vorrichtung nach Anspruch 11 oder 12, **dadurch gekennzeichnet, dass** die Konditionierungsmittel einen Filter (20) umfassen, um das Rohsynthesegas (3) in einem Filter (20) zu filtern, um Partikel wie Asche (49) aus dem Rohsynthesegas (3) zu beseitigen, und dass die Vorrichtung ferner Partikelzuführmittel zum Zuführen mindestens eines Teils der im Filter (20) ausgefilterten Partikel zum Überhitzungskessel (50) zwecks Verwendung als Brennstoff im Überhitzungskessel (50) umfasst.

14. Vorrichtung nach einem der Ansprüche 11 bis 13, **dadurch gekennzeichnet, dass** die Konditionierungsmittel Ultrareinigungsmittel (23) umfassen, um Schwefelbestandteile, CO₂ (Kohlenstoffdioxid), H₂O (Wasser), HCN (Cyanwasserstoff), CH₃Cl (Methylchlorid), Carbonyle, Cl (Chlorid) und NO_{X} (Stickstoffoxid) aus dem Rohsynthesegas (3) zu beseitigen, und dass die Vorrichtung ferner Ultrareinigungsnebenprodukt-Zuführmittel umfasst, um mindestens einen Teil des in der Ultrareinigung erzeugten gasförmigen Nebenprodukts (48) zum Überhitzungskessel (50) zu führen.

15. Vorrichtung nach Anspruch 14, **dadurch gekennzeichnet, dass** die Ultrareinigungsnebenprodukt-Zuführmittel dazu eingerichtet sind, ein in der Ultrareinigung erzeugtes H2S-reiches gasförmiges Nebenprodukt (48) dem Überhitzungskessel (50) zuzuführen, um dieses im Überhitzungskessel (50) zu vernichten.

16. Vorrichtung nach einem der Ansprüche 11 bis 15, **dadurch gekennzeichnet, dass** die Konditionierungsmittel Produktveredelungsmittel (32) umfassen, um das aus der Fischer-Tropsch-Synthese gewonnene flüssige kohlenwasserstoffhaltige Produkt (1) zu veredeln, und dass die Vorrichtung ferner Produktveredelungsnebenprodukt-Zuführmittel zum Zuführen mindestens eines Teils der in der Produktveredelung erzeugten Nebenproduktfraktionen (47) zum Überhitzungskessel (50) zwecks Verwendung als Brennstoff im Überhitzungskessel (50) umfasst.

17. Vorrichtung nach einem der Ansprüche 11 bis 16, **dadurch gekennzeichnet, dass** der Überhitzungskessel (50) dazu eingerichtet ist, Stützbrennstoff (46) zur Einstellung des Betriebs des Überhitzungskessels (50) zu verwenden, wobei der Stützbrennstoff (46) leichtes Heizöl und/oder Erdgas ist.

18. Vorrichtung nach Anspruch 17, **dadurch gekennzeichnet, dass** 15 % oder weniger, bevorzugt 10 % oder weniger, bevorzugter 5 % oder weniger, der Gesamtbrennstoffleistung dazu eingerichtet sind, dem Überhitzungskessel (50) als Stützbrennstoff (46) zugeführt zu werden.

19. Vorrichtung nach einem der Ansprüche 11 bis 18, **dadurch gekennzeichnet, dass** der Überhitzungskessel (50) mit einer Dampfturbine betriebswirksam verbunden ist, um den überhitzten Dampf (53) in der Dampfturbine zu nutzen.

20. Vorrichtung nach einem der Ansprüche 11 bis 18, **dadurch gekennzeichnet, dass** der Überhitzungskessel (50) mit dem Verdichter (24) betriebswirksam verbunden ist, um den überhitzten Dampf (52) für die Druckbeaufschlagung des Rohsynthesegases (3) auf das gereinigte Synthesegas (4) vor dessen Einführung in den Fischer-Tropsch-Reaktor (5) zu nutzen.

21. Vorrichtung nach einem der Ansprüche 11 bis 20, **dadurch gekennzeichnet, dass** die Vorrichtung ein integraler Bestandteil einer Industrieanlage mit Dampfturbine (55) ist.

## Revendications

1. Procédé de fabrication d'un produit hydrocarboné liquide (1) à partir d'une biomasse solide (2), ledit procédé comprenant les étapes consistant à
gazéifier une biomasse solide (2) dans un gazogène (6) pour produire un gaz de synthèse brut (3) ;
conditionner le gaz de synthèse brut (3) pour purifier le gaz de synthèse brut (3) afin d'obtenir un gaz de synthèse purifié (4), ledit conditionnement comprenant les étapes consistant à abaisser la température du gaz de synthèse brut (3) dans un refroidisseur (19) produisant une vapeur saturée (51), filtrer le gaz de synthèse brut (3) dans un filtre (20) et conditionner le gaz de synthèse brut (3) par ultra-purification (23) ;
assujettir la gaz purifié (4) à une synthèse Fischer-Tropsch dans un réacteur Fischer-Tropsch (5) pour produire un produit hydrocarboné liquide (1),
en option, améliorer la produit hydrocarboné liquide (1) dans l'amélioration de produit (32) en effectuant d'abord une évaporation flash du produit hydrocarboné liquide (1) pour séparer les hydrocarbures légers du flux de produit ; et
surchauffer la vapeur saturée (51) produite par le refroidisseur (19) dans une chaudière de surchauffe (50) pour produire une vapeur surchauffée (52, 53),
**caractérisé par** l'étape consistant à faire fonctionner la chaudière de surchauffe (50) exclusivement au gaz de queue (9) généré dans la synthèse Fischer-Tropsch et à un ou plusieurs sous-produits (49, 48, 47) générés dans le filtre (20), l'ultra-purification (23) ou l'amélioration de produit (32) du procédé, en option ensemble avec un combustible d'appoint séparé (46) utilisé pour le démarrage ou pour le réglage ou le contrôle du fonctionnement de la chaudière de surchauffe (50), la quantité de combustible d'appoint pour le réglage et le contrôle étant de 15 % ou moins de la puissance de combustible totale de la chaudière de surchauffe (50).

2. Procédé selon la revendication 1, **caractérisé par** l'étape consistant à conditionner le gaz de synthèse brut (3) en filtrant le gaz de synthèse brut (3) dans un filtre (20) pour extraire des particules, telles que des cendres (49), du gaz de synthèse brut (3), et à amener des cendres collectées dans le filtre (20), qui comprennent le char, vers la chaudière de surchauffe (50) pour leur utilisation en tant que combustible dans la chaudière de surchauffe (50).

3. Procédé selon l'une des revendications 1 ou 2, **caractérisé par** l'étape consistant à conditionner le gaz de synthèse brut (3) par ultra-purification (23) pour extraire du gaz de synthèse brut (3) des composants de soufre, CO₂ (dioxyde de carbone), H₂O (eau), HCN (cyanure d'hydrogène), CH₃Cl (chlorure de méthyle), carbonyles, Cl (chlorure) et NO_{X} (oxyde d'azote) ; et à amener un sous-produit gazeux (48) généré dans l'ultra-purification (23) vers la chaudière de surchauffe (50) pour son utilisation en tant que combustible dans la chaudière de surchauffe (50).

4. Procédé selon la revendication 3, **caractérisé par** l'étape consistant à amener un sous-produit gazeux riche en H₂S (48) généré dans l'ultra-purification (23) vers la chaudière de surchauffe (50) pour sa destruction dans la chaudière de surchauffe (50).

5. Procédé selon l'une des revendications 1 à 4, **caractérisé en ce que** le procédé comprend également une amélioration de produit (32) pour améliorer le produit hydrocarboné liquide (1) obtenu dans la synthèse Fischer-Tropsch pour au moins une fraction diesel (34) et au moins une fraction naphtha (35).

6. Procédé selon la revendication 5, **caractérisé par** l'étape consistant à amener des fractions de sous-produits (47) du produit hydrocarboné liquide (1) générées dans l'amélioration de produit (32) vers la chaudière de surchauffe (50) pour leur utilisation en tant que combustible dans la chaudière de surchauffe (50).

7. Procédé selon l'une des revendications 1 à 6, **caractérisé par** l'étape consistant à utiliser un combustible d'appoint séparé (46) pour le réglage du fonctionnement de la chaudière de surchauffe (50), ledit combustible d'appoint (46) étant le mazout léger et/ou le gaz naturel.

8. Procédé selon la revendication 7, **caractérisé par** l'étape consistant à apporter 15 % ou moins, préférablement 10 % ou moins, plus préférablement 5 % ou moins de la puissance de combustible totale en tant que combustible d'appoint (46) à la chaudière de surchauffe (50).

9. Procédé selon l'une des revendications 1 à 8, **caractérisé par** l'utilisation de la vapeur surchauffée (53) dans une turbine à vapeur (55).

10. Procédé selon l'une des revendications 1 à 9, **caractérisé par** l'utilisation de la vapeur surchauffée (52) pour la mise sous pression (24) du gaz de synthèse brut (3) ou du gaz de synthèse purifié (4) avant que celui-ci soit introduit dans le réacteur Fischer-Tropsch (5).

11. Appareil de production d'un produit hydrocarboné liquide (1) à partir d'une biomasse solide (2), ledit appareil comprenant :
un gazogène (6) pour gazéifier une biomasse solide (2) afin de produire un gaz de synthèse brut (3) ;
des moyens de conditionnement (18, 19, 20, 21, 22, 24, 23) pour conditionner le gaz de synthèse brut (3) afin d'obtenir un gaz de synthèse purifié (4), lesdits moyens de conditionnement comprenant un refroidisseur (19) pour abaisser la température du gaz de synthèse brut (3), ledit refroidisseur (19) étant agencé pour générer une vapeur saturée (51), un filtre (20) pour filtrer le gaz de synthèse brut (3) et des moyens d'ultra-purification (23) ;
un réacteur Fischer-Tropsch (5) pour assujettir le gaz purifié (4) à une synthèse Fischer-Tropsch afin de produire un produit hydrocarboné liquide (1) ;
en option, des moyens d'amélioration de produit (32) pour améliorer le produit hydrocarboné liquide (1) obtenu dans la synthèse Fischer-Tropsch, d'abord par l'évaporation flash du produit hydrocarboné liquide (1) afin de séparer les hydrocarbures légers du flux de produit, et
une chaudière de surchauffe (50) pour produire une vapeur surchauffée (52, 53) à partir de la vapeur saturée (51),
**caractérisé en ce que** la chaudière de surchauffe (50) est agencée pour fonctionner exclusivement au gaz de queue (9) généré dans la synthèse Fischer-Tropsch et à un ou plusieurs sous-produits (49, 48, 47) générés dans le filtre (20), l'ultra-purification (23) ou l'amélioration de produit (32) lors de la production du produit hydrocarboné liquide (1) à partir d'une biomasse solide (2) et introduits par des moyens d'alimentation en sous-produits, en option ensemble avec un combustible d'appoint séparé (46) utilisé pour le démarrage ou pour le réglage ou le contrôle du fonctionnement de la chaudière de surchauffe (50), la quantité de combustible d'appoint pour le réglage ou le contrôle étant de 15 % ou moins de la puissance de combustible totale de la chaudière de surchauffe (50).

12. Appareil selon la revendication 11, **caractérisé en ce que** l'appareil comprend des moyens d'alimentation en gaz de queue pour amener le gaz de queue (9) généré dans la synthèse Fischer-Tropsch vers la chaudière de surchauffe (50) pour son utilisation en tant que combustible dans la chaudière de surchauffe (50).

13. Appareil selon la revendication 11 ou 12, **caractérisé en ce que** les moyens de conditionnement comprennent un filtre (20) pour filtrer le gaz de synthèse brut (3) dans un filtre (20) afin d'extraire des particules, telles que des cendres (49), du gaz de synthèse brut (3), et que l'appareil comprend également des moyens d'alimentation en particules pour amener au moins une partie des particules filtrées dans le filtre (20) vers la chaudière de surchauffe (50) pour leur utilisation en tant que combustible dans la chaudière de surchauffe (50).

14. Appareil selon l'une des revendications 11 à 13, **caractérisé en ce que** les moyens de conditionnement comprennent des moyens d'ultra-purification (23) pour extraire du gaz de synthèse brut (3) des composants de soufre, CO₂ (dioxyde de carbone), H₂O (eau), HCN (cyanure d'hydrogène), CH₃Cl (chlorure de méthyle), carbonyles, Cl (chlorure) et NO_{X} (oxyde d'azote), et que l'appareil comprend également des moyens d'alimentation en sous-produit d'ultra-purification pour amener au moins une partie du sous-produit gazeux (48) généré dans l'ultra-purification vers la chaudière de surchauffe (50).

15. Appareil selon la revendication 14, **caractérisé en ce que** les moyens d'alimentation en sous-produit d'ultra-purification sont agencés pour amener un sous-produit gazeux riche en H₂S (48) généré dans l'ultra-purification vers la chaudière de surchauffe (50) pour sa destruction dans la chaudière de surchauffe (50).

16. Appareil selon l'une des revendications 11 à 15, **caractérisé en ce que** les moyens de conditionnement comprennent des moyens d'amélioration de produit (32) pour améliorer le produit hydrocarboné liquide (1) obtenu dans la synthèse Fischer-Tropsch et que l'appareil comprend également des moyens d'alimentation en sous-produit d'amélioration pour amener au moins une partie des fractions de sous-produit (47) générées dans l'amélioration de produit vers la chaudière de surchauffe (50) pour leur utilisation en tant que combustible dans la chaudière de surchauffe (50).

17. Appareil selon l'une des revendications 11 à 16, **caractérisé en ce que** la chaudière de surchauffe (50) est agencée pour utiliser un combustible d'appoint (46) pour le réglage du fonctionnement de la chaudière de surchauffe (50), ledit combustible d'appoint (46) étant le mazout léger et/ou le gaz naturel.

18. Appareil selon la revendication 17, **caractérisé en ce que** 15 % ou moins, préférablement 10 % ou moins, plus préférablement 5 % ou moins de la puissance de combustible totale est agencé pour être apporté à la chaudière de surchauffe (50) en tant que combustible d'appoint (46).

19. Appareil selon l'une des revendications 11 à 18, **caractérisé en ce que** la chaudière de surchauffe (50) est opérationnellement reliée à une turbine à vapeur pour l'utilisation de la vapeur surchauffée (53) dans la turbine à vapeur.

20. Appareil selon l'une des revendications 11 à 18, **caractérisé en ce que** la chaudière de surchauffe (50) est opérationnellement reliée au compresseur (24) pour l'utilisation de la vapeur surchauffée (52) pour la mise sous pression du gaz de synthèse brut (3) au gaz de synthèse purifié (4) avant que celui-ci soit introduit dans le réacteur Fischer-Tropsch (5).

21. Appareil selon l'une des revendications 11 à 20, **caractérisé en ce que** l'appareil fait partie intégrante d'un établissement industriel ayant une turbine à vapeur (55).
